# EUROPÄISCHE PATENTSCHRIFT

(11) **EP 3 785 984 B1**
(45) Veröffentlichungstag und Bekanntmachung des Hinweises auf die Patenterteilung: **25.10.2023**
(21) Anmeldenummer: 20187294.2
(22) Anmeldetag: 23.07.2020
(51) Int. Cl.: B60N 2/68, B60N 2/32, B60P 3/36

(54) **SITZGESTELL FÜR EINE FAHRZEUGSITZANORDNUNG**
SEAT FRAME FOR VEHICLE SEAT ASSEMBLY
CHÂSSIS DE SIÈGE POUR UN AGENCEMENT DE SIÈGE DE VÉHICULE

(30) Priorität: 27.08.2019 DE 102019122979
(43) Veröffentlichungstag der Anmeldung: 03.03.2021
(73) Patentinhaber: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(56) Entgegenhaltungen:
- CN-A- 108 741 872
- DE-U1-202018 006 085
- FR-A1- 2 871 746
- JP-A- H08 132 939
- US-A1- 2001 040 400

## Beschreibung

### Stand der Technik

Sitzgestelle für Fahrzeugsitzanordnungen, insbesondere zur Verwendung in Fahrzeugen wie Wohn- oder Campingmobilen sind bekannt. Beispielsweise ist ein solches Sitzgestell aus der US 2001/0040400 A1 bekannt.

Eine bekannte Fahrzeugsitzanordnung umfasst ein Sitzgestell, mittels welchem die Fahrzeugsitzanordnung von einer Fahrzeugsitzbank in einen insbesondere vollwertigen Fahrzeugsitz umbaubar ist.

Bei bekannten Fahrzeugsitzanordnungen ist ein Rückenlehnenelement des Fahrzeugsitz der Fahrzeugsitzanordnung in Fahrtrichtung wegschwenkbar, sodass eine Fahrzeugsitzbank realisierbar ist.

### Aufgabe und Vorteile der Erfindung

Aufgabe der vorliegenden Erfindung ist es, eine Fahrzeugsitzanordnung mit einem Sitzgestell bereitzustellen, mittels welcher eine alternative Fahrzeugsitzanordnung realisierbar ist.

Diese Aufgabe wird durch den Anspruch 1 gelöst.

In den abhängigen Ansprüchen sind vorteilhafte Weiterbildungen der Erfindung genannt.

Die Erfindung geht von einer Fahrzeugsitzanordnung mit einem Sitzgestell aus, insbesondere für eine Fahrzeugsitzbank. Die Fahrzeugsitzanordnung bildet in einer ersten Nutzposition einen Fahrzeugsitz und in einer zweiten Nutzposition eine Fahrzeugsitzbank.

Die Fahrzeugsitzanordnung ist vorteilhafterweise dazu ausgebildet in einem Fahrzeug anordenbar zu sein. Vorteilhafterweise ist das Fahrzeug als ein Wohnmobil, als ein Reisemobil, als ein Campingbus oder als ein Caravan vorhanden. Die Fahrzeugsitzanordnung bildet als Fahrzeugsitzbank bevorzugterweise ein Fahrzeugsofa. Beispielsweise stellt die Fahrzeugsitzbank für zwei oder mehr Nutzer eine Sitzgelegenheit bereit. Vorteilhafterweise ist die Fahrzeugsitzanordnung dazu ausgebildet, entlang einer Seitenwand des Fahrzeugs im Fahrzeug angeordnet zu werden. Beispielsweise bietet die Fahrzeugsitzanordnung in der ersten Nutzposition als Fahrzeugsitz einer insbesondere einzigen Person eine Sitzgelegenheit.

Bevorzugterweise ist eine Sitzrichtung der Fahrzeugsitzanordnung in der ersten Nutzposition quer zu einer Sitzrichtung in der zweiten Nutzposition ausgerichtet. Die Sitzrichtung in der ersten Nutzposition ist eine Sitzrichtung des Fahrzeugsitz der Fahrzeugsitzanordnung. Die Sitzrichtung der zweiten Nutzposition ist eine Sitzrichtung der Fahrzeugsitzbank der Fahrzeugsitzanordnung. Beispielsweise ist die Sitzrichtung der Fahrzeugsitzbank im angeordneten Zustand im Fahrzeug quer zu einer Fahrtrichtung des Fahrzeugs ausgebildet. Vorteilhafterweise ist die Sitzrichtung des Fahrzeugsitz der Fahrzeugsitzanordnung im angeordneten Zustand im Fahrzeug in Fahrtrichtung des Fahrzeugs oder entgegen der Fahrtrichtung des Fahrzeugs vorhanden. Hierdurch ist vorteilhafterweise ein vollwertiger Fahrzeugsitz realisierbar.

Der Kern der Erfindung wird darin gesehen, dass das Sitzgestell eine Stützanordnung, eine Rückenlehnenstruktur, ein Gelenk und ein Haltemechanismus umfasst, wobei die Stützanordnung eine Vertikalstütze und Anbringmittel umfasst, wobei die Vertikalstütze mittels der Anbringmittel in einem Bodenbereich eines Fahrzeugs aufrecht stehend fixierbar ist, wobei die Rückenlehnenstruktur über das Gelenk drehbeweglich mit der Stützanordnung verbunden ist, wobei der Haltemechanismus dazu ausgebildet ist, die Rückenlehnenstruktur in einem ersten Nutzzustand an der Stützanordnung zu fixieren, wobei mit dem Sitzgestell im ersten Nutzzustand ein Fahrzeugsitz bildbar ist, wobei die Rückenlehnenstruktur einen Teil einer Rückenlehne des Fahrzeugsitz im ersten Nutzzustand bildet, wobei die Rückenlehnenstruktur entgegen der Sitzrichtung des Fahrzeugsitz vom ersten Nutzzustand in einen zweiten Nutzzustand um eine Drehachse des Gelenks drehbar ist, wobei im zweiten Nutzzustand mit der Rückenlehnenstruktur eine Sitzfläche der Fahrzeugsitzanordnung bildbar ist. Hierdurch ist die Fahrzeugsitzanordnung vergleichsweise einfach von einem Fahrzeugsitz in eine Fahrzeugsitzbank oder umgekehrt umwandelbar.

Die Rückenlehnenstruktur ist vom ersten Nutzzustand in den zweiten Nutzzustand und umgekehrt relativ zu Stützanordnung bewegbar vorhanden. Die Rückenlehnenstruktur ist über das Gelenk drehbeweglich mit der Vertikalstütze verbunden.

Vorteilhafterweise ist die Rückenlehnenstruktur im ersten Nutzzustand entgegen der Sitzrichtung in einer nach Hinten gekippten Position vorhanden. Beispielsweise ist die Rückenlehnenstruktur im ersten Nutzzustand entgegen der Sitzrichtung zur Vertikale zwischen 0° und 20° verkippt vorhanden. Vorteilhafterweise ist die Rückenlehnenstruktur relativ zu einer Längsachse der Vertikalstütze verkippt vorhanden. Beispielsweise ist die Längsachse der Vertikalstützte in Richtung der Vertikalen ausgerichtet. Denkbar ist, dass die Rückenlehnenstruktur im ersten Nutzzustand entgegen der Sitzrichtung zur Vertikale um 5°, um 10°, um 15° oder um 20° nach hinten gekippt vorhanden ist.

An die Rückenlehnenstruktur ist ein erstes Polsterelement der Fahrzeugsitzanordnung anordenbar, wobei das erste Polsterelement in der ersten Nutzposition ein Rückenlehnenpolster des Fahrzeugsitz der Fahrzeugsitzanordnung bildet. Beispielsweise lehnt ein Nutzer bei der Nutzung des Fahrzeugsitz der Fahrzeugsitzanordnung mit seinen Schultern am ersten Polsterelement an, z.B. an einer Nutzfläche des ersten Polsterelements. Das erste Polsterelement bildet in der zweiten Nutzposition ein Sitzpolster der Fahrzeugsitzbank der Fahrzeugsitzanordnung. Beispielsweise sitzt ein Nutzer bei der Nutzung der Fahrzeugsitzbank auf dem ersten Polsterelement, beispielsweise auf einer Nutzfläche des Polsterelements. Bevorzugterweise lehnt der Nutzer in der ersten Nutzposition und sitzt ein Nutzer in der zweiten Nutzposition auf der gleichen Nutzfläche des ersten Polsterelements.

Vorteilhafterweise umfasst die Stützanordnung neben der Vertikalstütze eine Stützstrebe. Beispielsweise ist die Stützstrebe in einem Bereich oberhalb der Anbringmittel beabstandet zu den Anbringmittel an der Vertikalstütze schräg abstehend vorhanden. Vorteilhafterweise umfasst die Stützstrebe weitere Anbringmittel, um die Stützstrebe in einem Bodenbereich eines Fahrzeugs zu fixieren. Im angeordneten Zustand am Fahrzeug stützt die Stützstrebe die Vertikalstütze vorteilhafterweise in Fahrtrichtung des Fahrzeugs ab. Beispielsweise ist die Stützstrebe von der Vertikalstütze schräg nach unten abstehend vorhanden.

Zum Beispiel sind an der Stützanordnung, insbesondere an der Vertikalstütze Elemente eines Personenrückhaltesystem anordenbar.

Vorteilhafterweise sind an der Vertikalstütze ein Gurtaufroller und eine Gurtschließe des Personenrückhaltesystem montiert. Denkbar ist auch, dass an der Stützanordnung, insbesondere an der Vertikalstütze, ein Gurtumlenkelement vorhanden ist. Das Personenrückhaltesystem ist vorteilhafterweise als ein DreiPunkt-Gurtsystem ausgebildet.

Bevorzugterweise umfasst das Sitzgestell zwei Vertikalstützen, welche beabstandet zueinander vorhanden sind. Beispielsweise sind die zwei Vertikalstützen mittels einer Querstrebe miteinander verbunden. Zum Beispiel umfasst die Querstrebe die Anbringmittel zur Montage der Vertikalstützen an das Fahrzeug.

Vorteilhafterweise ist die Stützstrebe lösbar an der Vertikalstütze montierbar. Denkbar ist weiter, dass zwei Stützstrebe beabstandet zueinander vorhanden sind. Beispielsweise ist eine erste Stützstrebe mit einer ersten Vertikalstütze verbindbar und eine zweite Stützstrebe mit einer zweiten Vertikalstütze. Vorstellbar ist weiterhin, dass die zwei Stützstreben mittels eines Querelements miteinander verbunden sind. Zum Beispiel umfasst das Querelement die Anbringmittel zur Montage der Stützstreben an das Fahrzeug.

Die Vertikalstütze, die Stützstrebe, sowie Teile der Rückenlehnenstruktur sind vorteilhafterweise aus Metall, z.B. aus Stahl ausgebildet. Denkbar ist, dass die Vertikalstütze, die Stützstrebe, sowie die Rückenlehnenstruktur aus Rohren, z.B. aus Vierkantrohren gebildet sind.

Bevorzugterweise befindet sich das Sitzgestell im angeordneten Zustand an der Fahrzeugsitzanordnung im ersten Nutzzustand, wenn sich die Fahrzeugsitzanordnung in der ersten Nutzposition befindet. Beispielsweise befindet sich das Sitzgestell im angeordneten Zustand an der Fahrzeugsitzanordnung im zweiten Nutzzustand, wenn sich die Fahrzeugsitzanordnung in der zweiten Nutzposition befindet.

Die Anbringmittel umfassen vorteilhafterweise eine Schraube, eine Mutter, eine Niete oder ähnliche Verbindungsmittel. Vorteilhafterweise sind die Anbringmittel dazu ausgebildet, die Stützanordnung an einem Fahrzeugrahmen des Fahrzeugs zu montieren.

Weiter wird vorgeschlagen, dass der Haltemechanismus als ein Rastmechanismus ausgebildet ist. Hierdurch ist die Rückenlehnenstruktur vergleichsweise einfach und schnell relativ zur Stützanordnung festlegbar.

Beispielsweise ist der Haltemechanismus dazu ausgebildet, die Rückenlehnenstruktur im ersten Nutzzustand in einer ersten Position relativ zur Stützanordnung festzulegen und im zweiten Nutzzustand in einer zweiten Position relativ zur Stützanordnung. Denkbar ist auch, dass der Haltemechanismus dazu ausgebildet ist, die Rückenlehnenstruktur ausschließlich im ersten Nutzzustand festzulegen. Vorstellbar ist auch, dass der Haltemechanismus dazu ausgebildet ist, die Rückenlehnenstruktur sowohl im ersten Nutzzustand, als auch im zweiten Nutzzustand relativ zur Stützanordnung festzulegen.

Zum Beispiel weist der Rastmechanismus mehrere Raststufen auf. Beispielsweise ist mittels des Rastmechanismus die Rückenlehnenstruktur im ersten Nutzzustand in unterschiedlichen Raststellungen relativ zur Stützanordnung festlegbar. Denkbar ist auch, dass der Rastmechanismus dazu ausgebildet ist, die Rückenlehnenstruktur ausschließlich im ersten Nutzzustand in unterschiedlichen Raststellungen relativ zur Stützanordnung festzulegen. Beispielsweise sind mittels des Rastmechanismus verschiedene Kippstellung der Rückenlehnenstruktur im ersten Nutzzustand relativ zur Vertikalen festlegbar.

Beispielsweise ist die Rückenlehnenstruktur im zweiten Nutzzustand weder mit dem Haltemechanismus, noch mit dem Rastmechanismus relativ zur Stützanordnung festlegbar. Zum Beispiel ist die Rückenlehnenstruktur im zweiten Nutzzustand relativ zur Stützanordnung frei drehbar vorhanden.

Beispielsweise ist der Rastmechanismus dazu ausgebildet, die Rückenlehnenstruktur automatisch im ersten Nutzzustand zu verrasten, insbesondere festzulegen.

Ebenfalls von Vorteil ist, dass die Rückenlehnenstruktur als ein Rahmen ausgebildet ist, mit mindestens zwei Vertikalstreben und mindestens zwei Horizontalstreben, wobei eine Horizontalstrebe zwei Vertikalstreben an Enden der Vertikalstreben miteinander verbindet. Hierdurch ist die Rückenlehnenstruktur vergleichsweise stabil vorhanden.

Beispielsweise umfasst die Rückenlehnenstruktur zwei oder mehr Vertikalstreben und eine Horizontalstrebe. Vorteilhafterweise verbindet die Horizontalstrebe die zwei oder mehr Vertikalstreben miteinander. Enden der Vertikalstrebe sind vorteilhafterweise sich gegenüberliegend und voneinander beabstandet vorhanden. Bevorzugterweise sind die Enden der Vertikalstrebe entlang einer Längserstreckung der Vertikalstrebe gesehen voneinander beabstandet vorhanden.

Bevorzugterweise umfasst die Rückenlehnenstruktur eine Vertikalstrebe, welche sich quer zu einer Drehachse des Gelenks an der Sitzanordnung erstreckt. Beispielsweise ist die Vertikalstrebe und/oder die Horizontalstrebe als ein Rohr, z.B. als ein Vierkantrohr vorhanden. Beispielsweise umfasst die Vertikalstrebe eine erste und eine zweite Seite, wobei die beiden Seiten sich gegenüberliegend und beabstandet zueinander vorhanden sind. Vorteilhafterweise ist die erste Seite dazu vorgesehen das erste Polsterelement anzuordnen. Beispielsweise ist an der ersten Seite der Vertikalstrebe ein Stützelement anordenbar, an welchem das erste Polsterelement angeordnet, insbesondere aufgelegt werden kann. Das Stützelement ist beispielsweise plattenartig ausgebildet, z.B. als eine Platte. Das Stützelement ist beispielsweise als eine Holzplatte, als eine Kunststoffplatte oder als eine Platte aus einem Verbundmaterial vorhanden. Vorteilhafterweise umfasst das Sitzgestell, insbesondere die Rückenlehnenstruktur das Stützelement. Denkbar ist auch, dass das Stützelement Bestandteil der Fahrzeugsitzanordung ist.

Bevorzugterweise ist die erste Seite der Vertikalstrebe sowohl im ersten, als auch im zweiten Nutzzustand vom Bodenbereich des Fahrzeugs, insbesondere von den Anbringmitteln des Sitzgestells weiter beabstandet als die zweite Seite der Vertikalstrebe.

Vorteilhafterweise ist eine Horizontalstrebe, beispielsweise eine erste Horizontalstrebe, im Bereich des Gelenks am Sitzgestell angeordnet. Beispielsweise erstreckt sich die Drehachse des Gelenks entlang einer Längserstreckung einer Horizontalstrebe. Beispielsweise ist die erste Horizontalstrebe derart am Sitzgestell vorhanden, dass eine Symmetrieachse der ersten Horizontalstrebe mit der Drehachse des Gelenks zusammenfällt.

Ebenfalls ist es von Vorteil, dass die Rückenlehnenstruktur insbesondere genau drei Vertikalstreben aufweist. Vorteilhafterweise sind zwei Vertikalstreben länger ausgebildet als eine dritte Vertikalstrebe. Durch eine dritte Vertikalstrebe ist beispielsweise eine Sitzfläche der Fahrzeugsitzanordnung in der zweiten Nutzposition vergleichsweise vergrößert. Vorteilhafterweise erstrecken sich die Vertikalstreben der Rückenlehnenstruktur entlang ihren Längserstreckungen parallel zueinander.

Des Weiteren ist es von Vorteil, dass eine Vertikalstrebe Ausnehmungen aufweist. Vorteilhafterweise sind die Ausnehmungen an der ersten Seite vorhanden. Durch die Ausnehmung ist im Crashfall eine gezielte Verformung der Rückenlehnenstruktur vorgebbar.

Die Rückenlehnenstruktur weist ein Montageorgan zur Anordnung einer Kopfstütze der Fahrzeugsitzanordnung auf, wobei das Sitzgestell ein Adapterelement umfasst, wobei das Adapterelement an die Rückenlehnenstruktur angeordnet ist, wobei das Adapterelement ein Montageelement zur Montage der Kopfstütze umfasst, sodass die Kopfstütze im angeordneten Zustand des Adapterelements an der Rückenlehnenstruktur am Adapterelement anbringbar ist, wobei das Montageorgan und das Montageelement im angeordneten Zustand des Adapterelements an der Rückenlehnenstruktur räumlich beabstandet vorhanden sind. Vorteilhafterweise ist hierdurch die Kopfstütze in zwei verschiedenen Positionen, insbesondere in zwei verschiedenen Ausrichtungen am Sitzgestell anordenbar.

Das Montageelement ist beispielsweise als ein Vierkantrohr mit Aufnahmeelementen zur Aufnahme der Kopfstütze ausgebildet. Die Aufnahmeelemente sind beispielsweise als Bohrungen am Montageelement vorhanden. Das Adapterelement ist beispielsweise plattenartig ausgebildet, z.B. als eine Platte vorhanden. Das Montageelement ist mit dem Adapterelement vorteilhafterweise unlösbar verbunden, z.B. verschweißt. Das Adapterelement umfasst beispielsweise Montagemittel, um das Adapterelement an der Rückenlehnenstruktur zu montieren, z.B. anzuschrauben. Beispielsweise ist das Adapterelement mit der Rückenlehnenstruktur unlösbar oder lösbar verbindbar. Denkbar ist beispielsweise, dass das Adapterelement mit der Rückenlehnenstruktur verschweißt ist.

Das Montageorgan ist vorteilhafterweise an einer Horizontalstrebe der Rückenlehnenstruktur ausgebildet. Vorteilhafterweise ist die Horizontalstrebe der Rückenlehnenstruktur, beispielsweise eine zweite Horizontalstrebe, an welcher das Montageorgan vorhanden ist, an einem dem Gelenk des Sitzgestells gegenüberliegenden und beabstandeten Ende der Vertikalstütze ausgebildet. Bevorzugterweise ist das Adapterelement in einem Bereich zwischen der zweiten Horizontalstrebe und der ersten Horizontalstrebe, oder in einem Bereich zwischen der zweiten Horizontalstrebe und dem Gelenk an der Rückenlehnenstruktur vorhanden. Beispielsweise ist das Adapterelement zwischen zwei Vertikalstreben der Rückenlehnenstruktur ausgebildet.

Vorteilhafterweise ist an der Rückenlehnenstruktur ein Umlenkelement des Personenrückhaltesystems vorhanden. Das Umlenkelement ist beispielsweise dazu ausgebildet, einen Gurt des Personenrückhaltesystems umzulenken, sodass ein Drei-Punkt-Gurtsystem realisierbar ist.

Die Fahrzeugsitzanordnung weist das erste Polsterelement auf, wobei das erste Polsterelement in der ersten Nutzposition ein Rückenlehnenpolster des Fahrzeugsitz der Fahrzeugsitzanordnung bildet, wobei das erste Polsterelement in der zweiten Nutzposition ein Sitzpolster der Fahrzeugsitzbank der Fahrzeugsitzanordnung bildet, wobei die Rückenlehnenstruktur des Sitzgestells eine Anlagefläche zur Anlage des ersten Polsterelements aufweist und das erste Polsterelement in der ersten und in der zweiten Nutzposition an der Anlagefläche der Rückenlehnenstruktur anliegt oder aufliegt. Hierdurch ist eine vergleichsweise einfach zu bedienende Fahrzeugsitzanordnung geschaffen.

Bevorzugterweise bildet das Stützelement die Anlagefläche. Vorteilhafterweise liegt das erste Polsterelement in der ersten und in der zweiten Nutzposition an der Anlagefläche der Rückenlehnenstruktur unmittelbar an oder auf.

Von Vorteil erweist sich auch, dass die Fahrzeugsitzanordnung ein zweites Polsterelement aufweist, wobei das zweite Polsterelement in der ersten Nutzposition ein Sitzpolster des Fahrzeugsitz der Fahrzeugsitzanordnung bildet, wobei das zweite Polsterelement in der zweiten Nutzposition ein Sitzpolster der Fahrzeugsitzbank der Fahrzeugsitzanordnung bildet. Vorteilhafterweise ist das zweite Polsterelement an der Fahrzeugsitzanordnung fixiert vorhanden. Beispielsweise ist das zweite Polsterelement mit der verbleibenden Fahrzeugsitzanordnung lösbar verbindbar. Vorstellbar ist, dass das zweite Polsterelement mittels Klettelementen oder mittels Druckknopfelementen mit der verbleibenden Fahrzeugsitzanordnung verbunden ist.

Weiter ist es von Vorteil, dass das erste und das zweite Polsterelement beweglich miteinander verbunden sind. Hierdurch ist eine Handhabung der Polsterelemente vereinfacht.

Beispielsweise sind das erste und das zweite Polsterelement miteinander unlösbar verbunden. Zum Beispiel sind das erste und das zweite Polsterelement miteinander vernäht. Vorteilhafterweise sind das erste und das zweite Polsterelement entlang einer Kante des ersten und des zweiten Polsterelements miteinander verbunden. Hierdurch ist ein Polsterelement auf das andere klappbar, sodass die Nutzflächen der beiden Polsterelemente aneinander anliegen.

Ebenfalls weist die Fahrzeugsitzanordnung ein drittes Polsterelement auf, wobei das dritte Polsterelement in der ersten Nutzposition am Montageorgan des Sitzgestells anordenbar ist, um eine Kopfstütze des Fahrzeugsitz zu bilden, wobei das dritte Polsterelement in der zweiten Nutzposition am Montageelement des Sitzgestells anordenbar ist, um eine Armlehne der Fahrzeugsitzbank zu bilden. Vorteilhafterweise ist das dritte Polsterelement die Kopfstütze des Fahrzeugsitz der Fahrzeugsitzanordnung. Hierdurch ist eine Reduzierung der Einzelteile der Fahrzeugsitzanordnung realisiert.

Das dritte Polsterelement liegt in der zweiten Nutzposition unmittelbar auf der Anlagenfläche auf. Vorteilhafterweise umfasst die Rückenlehnenstruktur einen Riegelmechanismus, um das dritte Polsterelement im angeordneten Zustand am Montageorgan zu verriegeln.

Eine vorteilhafte Ausgestaltung der Fahrzeugsitzanordnung ist, dass die Fahrzeugsitzanordnung einen Unterbau aufweist, wobei der Unterbau zumindest drei Seitenwände umfasst, welche in einem Bodenbereich eines Fahrzeugs aufrecht stehend fixierbar sind, wobei die Seitenwände miteinander verbunden sind und einen Innenraum umschließen, wobei im Innenraum das Sitzgestell angeordnet ist, wobei in der zweiten Nutzposition die Rückenlehnenstruktur auf einer Seitenwand des Unterbaus aufliegt, um eine Sitzfläche der Fahrzeugsitzbank zu bilden.

Denkbar ist, dass die drei Seitenwände zusammen mit einer Fahrzeugwand des Fahrzeugs den Innenraum bilden. Vorstellbar ist auch, dass die Fahrzeugsitzanordnung vier Seitenwände aufweist, wobei die Seitenwände miteinander verbunden sind und den Innenraum umschließen. Beispielsweise bilden die vier Seitenwände einen rechteckigen Rahmen. Insbesondere bilden die vier Seitenwände im angeordneten Zustand am Fahrzeug zusammen mit einem Fahrzeugboden einen Kasten. Vorteilhafterweise umschließen die Seitenwände das Sitzgestell, insbesondere zumindest die Stützanordnung des Sitzgestells. Bevorzugterweise ist die Stützanordnung des Sitzgestells, insbesondere vollständig, im Innenraum des Unterbaus vorhanden.

Beispielsweise stützt eine Seitenwand des Unterbaus die Rückenlehnenstruktur in der zweiten Nutzposition ab. Vorstellbar ist, dass eine Seitenwand eine Ausnehmung aufweist, um die Rückenlehnenstruktur aufzunehmen, sodass die Anlagefläche der Rückenlehnenstruktur bündig mit einer Oberseite der Seitenwände abschließt.

Vorstellbar ist weiterhin, dass der Unterbau ein Deckelelement aufweist, wobei das Deckelelement zumindest mit zwei Seitenwänden verbunden ist. Vorteilhafterweise besitzt das Deckelelement eine Auflagefläche zur Auflage des zweiten Polsterelements. Denkbar ist, dass das zweite Polsterelement mit dem Deckelelement unlösbar oder lösbar verbunden ist. Vorteilhafterweise ist die Auflagefläche des Deckelelements in der zweiten Nutzposition bündig mit der Anlagefläche der Rückenlehnenstruktur vorhanden. Vorstellbar ist außerdem, dass das Deckelelement gelenkig mit einer Seitenwand verbunden ist, sodass das Deckelelement z.B. als Klappe vorhanden ist. Außerdem wird vorgeschlagen, dass ein Auflageelement vorhanden ist, welches beweglich mit dem Unterbau verbunden ist, wobei das Auflageelement in einem ersten Zustand festlegbar ist, wobei im ersten Zustand das Auflageelement eine Auflagefläche für ein viertes Polsterelement bildet, wobei das vierte Polsterelement als eine Armlehne der Fahrzeugsitzbank ausgebildet ist. Hierdurch ist eine Nutzfläche der Fahrzeugsitzanordnung in der zweiten Nutzposition vergleichsweise einfach vergrößerbar. Auch ist hierdurch vergleichsweise einfach ein Fahrzeugsitz, insbesondere Beinfreiheit für einen Nutzer des Fahrzeugsitz realisierbar. Beispielsweise ist das Auflageelement gelenkig mit einer Seitenwand verbunden. Vorteilhafterweise ist das Auflageelement in einem zweiten Zustand mit einer Unterseite anliegend am Seitenwandelement vorhanden. Beispielsweise ist die Unterseite des Auflageelements gegenüberliegend und beabstandet zur Auflagefläche des Auflageelements ausgebildet.

Die Fahrzeugsitzanordnung in der zweiten Nutzposition als Fahrzeugsitzbank ist beispielsweise als ein Sofa, insbesondere als ein Fahrzeugsofa ausgebildet.

Die Erfindung betrifft auch ein Fahrzeug mit der zuvor beschriebenen Fahrzeugsitzanordnung.

### Ausführungsbeispiel

Ein Ausführungsbeispiel wird anhand der nachstehenden schematischen Zeichnungen unter Angabe weiterer Einzelheiten und Vorteile näher erläutert:

Es zeigen:
- Figur 1: zeigt ein erfindungsgemäßes Sitzgestell in einer Explosionsdarstellung von schräg seitlich vorne oben,
- Figur 2: zeigt das Sitzgestell gemäß Figur 1 im zusammengesetzten Zustand in einer Frontansicht,
- Figur 3: zeigt das Sitzgestell gemäß Figur 1 im zusammengesetzten Zustand mit angeordneten Polsterelementen in einer Seitenansicht und
- Figuren 4 bis 7: zeigen eine Fahrzeugsitzanordnung in unterschiedlichen Zuständen.

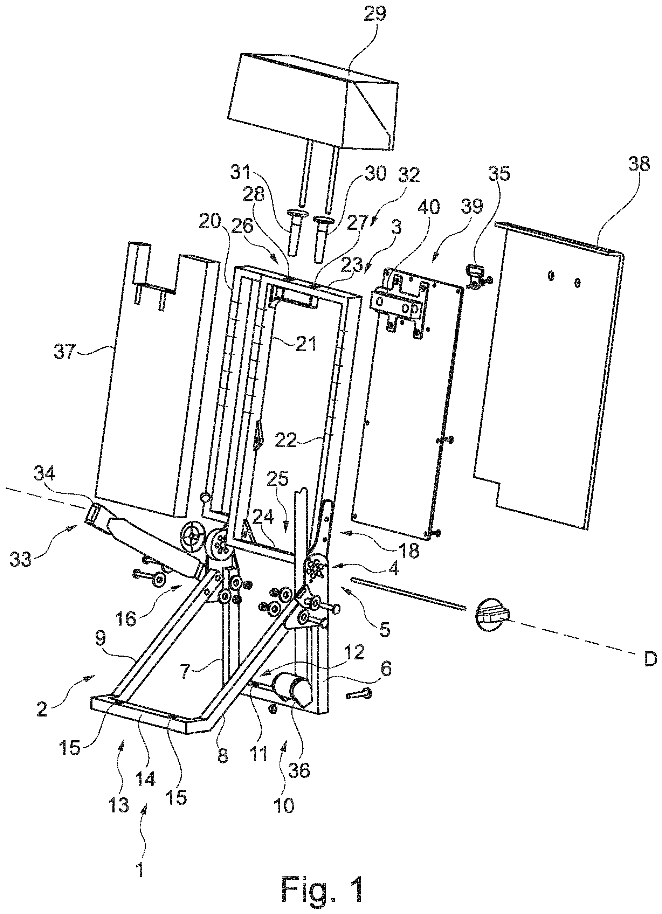

Figur 1 zeigt ein Sitzgestell 1. Das Sitzgestell 1 umfasst eine Stützanordnung 2, eine Rückenlehnenstruktur 3, ein Gelenk 4 und einen Haltemechanismus 5.

Die Stützanordnung 2 umfasst beispielsweise zwei Vertikalstützen 6, 7 und zum Beispiel zwei Stützstreben 8, 9. Vorteilhafterweise sind die beiden Vertikalstützen 6, 7 an einem unteren Ende 10 durch eine Querstrebe 11 miteinander verbunden. An der Querstrebe 11 sind beispielsweise Anbringmittel 12 vorhanden, um die Stützanordnung 2 an einem Fahrzeug zu befestigen. Von Vorteil erweist sich ebenfalls, dass die Stützstrebe 8, 9 an einem unteren Ende 13 durch eine weitere Querstrebe 14 miteinander verbunden sind, wobei die Querstrebe 14 weitere Anbringmittel 15 aufweist, um die Stützanordnung 2 an einem Fahrzeug zu befestigen. An einem oberen Ende 16 der Stützanordnung 2 ist jeweils eine Stützstrebe 8, 9 mit jeweils einer Vertikalstütze 6, 7 verbunden. Die Stützstreben 8, 9 sind ausgehend vom oberen Ende 16 in Sitzrichtung S eines mit dem Sitzgestell 1 realisierbaren Fahrzeugsitz 17 nach schräg unten verlaufend vorhanden, sodass die Stützstrebe 8, 9 die Vertikalstützen 6, 7 nach vorne, in Sitzrichtung abstützen.

Die Vertikalstützen 6, 7 sind mit ihren Längserstreckungen entlang der vertikalen V ausgerichtet vorhanden, sodass sie aufrecht stehend an einem Bodenbereich 50 eines Fahrzeugs 51 fixierbar sind.

Die Rückenlehnenstruktur 3 ist an einem unteren Ende 18 über das Gelenk 4 um eine Drehachse D des Gelenks 4 drehbar zur Stützanordnung 2 am oberen Ende 16 der Stützanordnung 2 angelenkt. Im Bereich des Gelenks 4 ist der Haltemechanismus 5 in Form eines Rastmechanismus ausgebildet. Vorteilhafterweise ist der Rastmechanismus dazu ausgebildet die Rückenlehnenstruktur 3 relativ zur Stützanordnung 2 in der in der Figur 1 gezeigten Fahrzeugsitzposition, dem ersten Nutzzustand des Sitzgestells 1 bzw. der ersten Nutzposition einer Fahrzeugsitzanordnung 19 festzulegen oder zu verrasten.

Beispielsweise umfasst die Rückenlehnenstruktur 3 drei Vertikalstreben 20-22 und zwei Horizontalstreben 23, 24. Die erste Horizontalstrebe 24 verbindet die beiden Vertikalstrebe 21, 22 an einem unteren Ende 25, im Bereich der Drehachse D miteinander. Die zweite Horizontalstrebe 23 verbindet die drei Vertikalstrebe 20-22 an einem oberen Ende 26 der Vertikalstreben 20-22 miteinander. An der zweiten Horizontalstrebe 23 sind Montageorgane 27, 28 vorhanden, um eine Kopfstütze 29, welche als drittes Polsterelement ausgebildet ist, anzuordnen. Des Weiteren sind in Figur 1 Riegelelemente 30, 31 eines Riegelmechanismus 31 gezeigt. Die Riegelelemente 30, 31 sind dazu ausgebildet, an die Montageorgane 27, 28 angeordnet zu werden, um die Kopfstütze 29 im angeordneten Zustand an den Montageorganen 27, 28 mit den Montageorganen 27, 28 zu verriegeln.

Bevorzugterweise sind am Sitzgestell 1 Elemente eines Gurtrückhaltesystems 33 angeordnet. Das Sitzgestell 1 umfasst beispielsweise eine Gurtschließe 34, einen Gurtumlenkpunkt 35 und einen Gurtaufroller 36.

Außerdem kann das Sitzgestell 1 ein Schaumstoffelement 37 aufweisen, welches in Zwischenräume der Rückenlehnenstruktur 3 anordenbar ist. Auch kann das Sitzgestell 1 ein Abdeckelement 38 umfassen, um eine Rückseite der Rückenlehnenstruktur 3 optisch vorteilhaft abzudecken.

Das Sitzgestell 1 weist auch ein Adapterelement 39 auf. Am Adapterelement 39 ist ein Montageelement 4C angeordnet.

Mittels des Montageelements 40 kann die Kopfstütze 29 im zweiten Nutzzustand des Sitzgestells 1 in Form einer Armlehne verwendet werden.

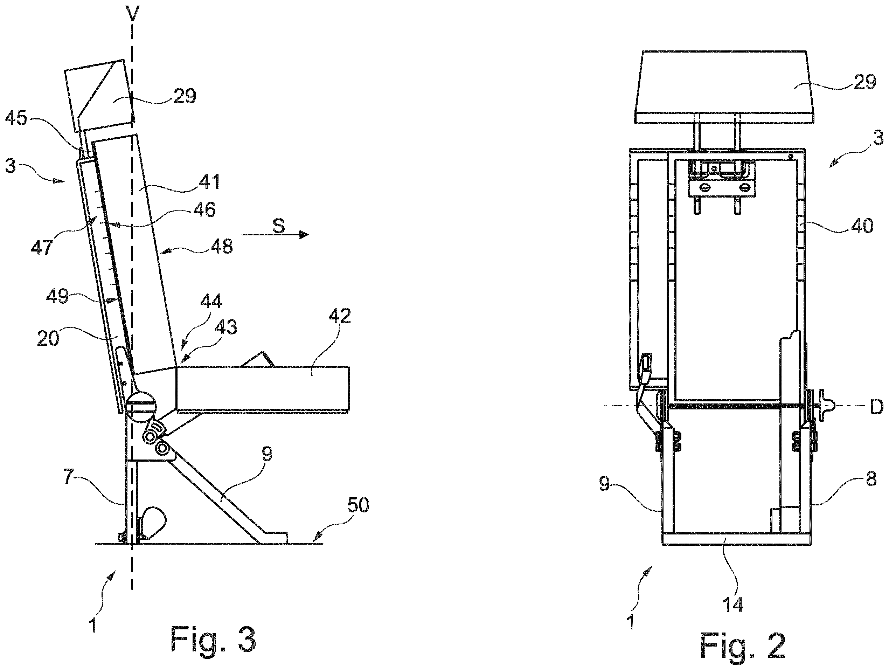

In Figur 3 ist zusätzlich zum Sitzgestell 1 ein erstes Polsterelement 41 und ein zweites Polsterelement 42 der Fahrzeugsitzanordnung 19 exemplarisch dargestellt. Wie in Figur 3 gezeigt ist, ist das zweite Polsterelement 42 im Bereich einer Kante 43 des zweiten Polsterelements 42 mit einer Kante 44 des ersten Polsterelements 41 verbunden. Weiter ist in der Figur 3 gezeigt, dass das erste Polsterelement 41 mit einer Anlagefläche 49 an einem Stützelement 45 des Sitzgestells 1 anliegt. Das Stützelement 45 ist dabei an einer ersten Seite 46 der Vertikalstrebe 20 angeordnet. An der ersten Seite 46 der Vertikalstrebe 20 sind beispielsweise außerdem Ausnehmungen 47 vorhanden, um im Crashfall eine gezielte Verformung der Vertikalstrebe 20 vorzugeben. Eine Nutzfläche 48 des ersten Polsterelements 41 ist damit gegenüberliegend und beabstandet zur Anlagefläche 49 vorhanden.

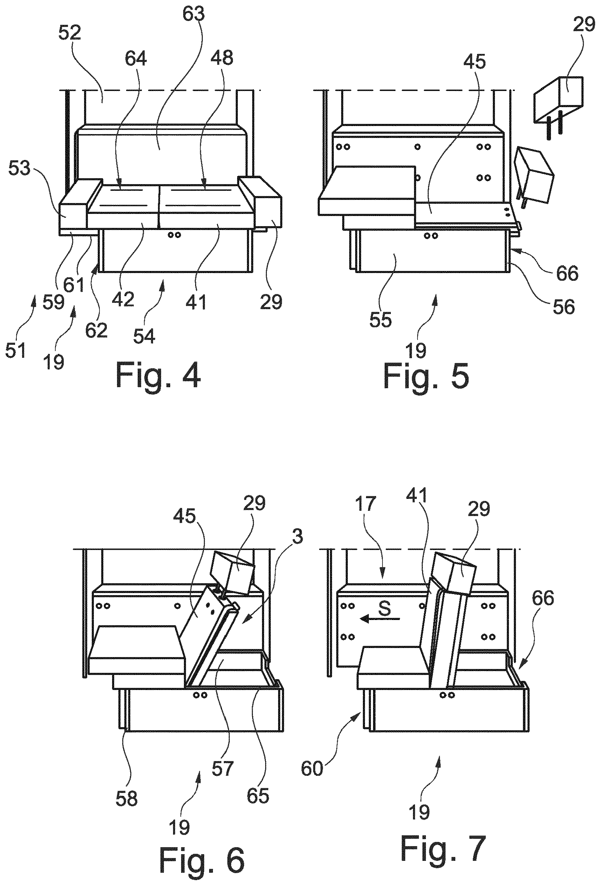

In den Figuren 4 bis 7 ist eine Fahrzeugsitzanordnung 19 im eingebauten Zustand in einem Fahrzeug 51 gezeigt. In Figur 4 gezeigt ist eine Fahrzeugwand 52 des Fahrzeugs 51, das erste und das zweite Polsterelement 41, 42, die Kopfstütze 29, welche in Figur 4 in der Ausbildung der Fahrzeugsitzanordnung 19 als eine Fahrzeugsitzbank, als Armlehne und damit als ein drittes Polsterelement Verwendung findet, sowie ein viertes Polsterelement 53 der Fahrzeugsitzanordnung 19.

Des Weiteren ist in den Figuren 4 bis 7 gezeigt, dass die Fahrzeugsitzanordnung 19 einen Unterbau 54 umfasst. Der Unterbau 54 weist beispielsweise vier Seitenwände 55-58 auf. Am Unterbau 54 ist vorteilhafterweise ein Auflageelement 59 gelenkig mit der Seitenwand 58 verbunden. In einem ersten Zustand gemäß Figur 4, im Zustand der Fahrzeugsitzbank, bildet das Auflageelement 59 eine Auflagefläche 60 für das vierte Polsterelement 53 in Form einer weiteren Armstütze. In einem zweiten Zustand gemäß Figur 7, im Zustand des Fahrzeugsitzes, ist das Auflageelemente 59 mit einer Unterseite 61 anliegend an einer Seitenfläche 62 der Seitenwand 58 abgeklappt vorhanden.

Vorteilhafterweise umfasst die Fahrzeugsitzanordnung 19 ein fünftes Polsterelement 63, welches im Zustand der zweiten Nutzposition, im Zustand der Fahrzeugsitzbank gemäß Figur 4, ein Rückenlehnenpolster der Fahrzeugsitzbank bildet.

Ausgehend vom Zustand der Fahrzeugsitzbank gemäß Figur 4 ist in den Figuren 5 bis 7 ein Umbauvorgang hin zu einem Fahrzeugsitz der Fahrzeugsitzanordnung 19 gemäß Figur 7 gezeigt. Um die Fahrzeugsitzanordnung 19 von einer Fahrzeugsitzbank zu einem Fahrzeugsitz umzubauen sind zunächst das dritte Polsterelement 53, das fünfte Polsterelement 63, sowie die Kopfstütze 29 zu entfernen. Des Weiteren ist das Auflageelement 59 weg zu klappen, sowie das erste Polsterelement 41 mit seiner Nutzfläche 48 auf die Nutzfläche 64 des zweiten Polsterelements 42 zu klappen. Anschließend kann die Rückenlehnenstruktur 3 des Sitzgestells 1 in Sitzrichtung S nach oben in den ersten Nutzzustand gedreht werden. Sodann wird das erste Polsterelement 41 entgegen der Sitzrichtung S in Richtung Stützelement 45 zurück auf die Rückenlehnenstruktur 3 geklappt und die Kopfstütze 29 wird an den Montageorganen 27, 28 angeordnet.

Wie in Figur 5 gezeigt, ist die Rückenlehnenstruktur 3 im zweiten Nutzzustand, als Fahrzeugsitzbank, mit eine Oberseite 65 des Unterbaus 54 eben vorhanden. Hierzu ist an der Seitenwand 56 eine Aussparung 66 vorgesehen, in welcher die Rückenlehnenstruktur 3 auf der Seitenwand 56 aufliegend aufgenommen ist.

**Bezugszeichenliste**

| | | | |
|---|---|---|---|
| 1 | Sitzgestell | 34 | Gurtschließe |
| 2 | Stützanordnung | 35 | Gurtumlenkpunkt |
| 3 | Rückenlehnenstruktur | 36 , | Gurtaufroller |
| 4 | Gelenk | 37 | Schaumstoffelement |
| 5 | Haltemechanismus | 38 | Abdeckelement |
| 6 | Vertikalstütze | 39 | Adapterelement |
| 7 | Vertikalstütze | 40 | Montageelement |
| 8 | Stützstrebe | 41 | Polsterelement |
| 9 | Stützstrebe | 42 | Polsterelement |
| 10 | Ende | 43 | Kante |
| 11 | Querstrebe | 44 | Kante |
| 12 | Anbringmittel | 45 | Stützelement |
| 13 | Ende | 46 | Seite |
| 14 | Querstrebe | 47 | Ausnehmung |
| 15 | Anbringmittel | 48 | Nutzfläche |
| 16 | Ende | 49 | Anlagefläche |
| 17 | Fahrzeugsitz | 50 | Bodenbereich |
| 18 | Ende | 51 | Fahrzeug |
| 19 | Fahrzeugsitzanordnung | 52 | Fahrzeugwand |
| 20 | Vertikalstrebe | 53 | Polsterelement |
| 21 | Vertikalstrebe | 54 | Unterbau |
| 22 | Vertikalstrebe | 55 | Seitenwand |
| 23 | Horizontalstrebe | 56 | Seitenwand |
| 24 | Horizontalstrebe | 57 | Seitenwand |
| 25 | Ende | 58 | Seitenwand |
| 26 | Ende | 59 | Auflageelement |
| 27 | Montageorgan | 60 | Auflagefläche |
| 28 | Montageorgan | 61 | Unterseite |
| 29 | Kopfstütze | 62 | Seitenfläche |
| 30 | Riegelelement | 63 | Polsterelement |
| 31 | Riegelelement ' | 64 | Nutzfläche |
| 32 | Riegelmechanismus | 65 | Oberseite |
| 33 | Gurtrückhaltesystem | 66 | Aussparung |

## Patentansprüche

1. Fahrzeugsitzanordnung (19) mit einem Sitzgestell (1), insbesondere Fahrzeugsitzbank, wobei die Fahrzeugsitzanordnung (19) in einer ersten Nutzposition einen Fahrzeugsitz bildet und in einer zweiten Nutzposition eine Fahrzeugsitzbank, wobei das Sitzgestell (1) eine Stützanordnung (2), eine Rückenlehnenstruktur (3), ein Gelenk (4) und ein Haltemechanismus (5) umfasst, wobei die Stützanordnung (2) eine Vertikalstütze (6, 7) und Anbringmittel (12) umfasst, wobei die Vertikalstütze (6, 7) mittels der Anbringmittel (12) in einem Bodenbereich (50) eines Fahrzeugs (51) aufrecht stehend fixierbar ist, wobei die Rückenlehnenstruktur (3) über das Gelenk (4) drehbeweglich mit der Stützanordnung (2) verbunden ist, wobei der Haltemechanismus (5) dazu ausgebildet ist, die Rückenlehnenstruktur (3) in einem ersten Nutzzustand an der Stützanordung (2) zu fixieren, wobei mit dem Sitzgestell (1) im ersten Nutzzustand ein Fahrzeugsitz bildbar ist, wobei die Rückenlehnenstruktur (3) einen Teil einer Rückenlehne des Fahrzeugsitz im ersten Nutzzustand bildet, wobei die Rückenlehnenstruktur (3) entgegen der Sitzrichtung des Fahrzeugsitz vom ersten Nutzzustand in einen zweiten Nutzzustand um eine Drehachse des Gelenks (4) drehbar ist, wobei im zweiten Nutzzustand mit der Rückenlehnenstruktur (3) eine Sitzfläche der Fahrzeugsitzanordnung (19) bildbar ist, wobei die Fahrzeugsitzanordnung (19) ein erstes Polsterelement (41) aufweist, wobei das erste Polsterelement (41) in der ersten Nutzposition ein Rückenlehnenpolster des Fahrzeugsitz der Fahrzeugsitzanordnung (19) bildet, wobei das erste Polsterelement (41) in der zweiten Nutzposition ein Sitzpolster der Fahrzeugsitzbank der Fahrzeugsitzanordnung (19) bildet, wobei die Rückenlehnenstruktur (3) des Sitzgestells (1) eine Anlagefläche (49) zur Anlage des ersten Polsterelements (41) aufweist und das erste Polsterelement in der ersten und in der zweiten Nutzposition an der Anlagefläche (49) der Rückenlehnenstruktur (3) anliegt, wobei die Rückenlehnenstruktur (3) ein Montageorgan (27, 28) zur Anordnung einer Kopfstütze (29) der Fahrzeugsitzanordnung (19) aufweist, wobei das Sitzgestell (1) ein Adapterelement (39) umfasst, wobei das Adapterelement (39) an die Rückenlehnenstruktur (3) angeordnet ist, wobei das Adapterelement (39) ein Montageelement (40) zur Montage der Kopfstütze (29) umfasst, sodass die Kopfstütze (29) im angeordneten Zustand des Adapterelements (39) an der Rückenlehnenstruktur (3) am Adapterelement (39) anbringbar ist, wobei das Montageorgan (27, 28) und das Montageelement (40) im angeordneten Zustand des Adapterelements (39) an der Rückenlehnenstruktur (3) räumlich beabstandet vorhanden sind, wobei die Fahrzeugsitzanordnung (19) ein drittes Polsterelement aufweist, wobei das dritte Polsterelement in der ersten Nutzposition am Montageorgan des Sitzgestells (1) anordenbar ist, um eine Kopfstütze (29) des Fahrzeugsitz zu bilden, wobei das dritte Polsterelement in der zweiten Nutzposition am Montageelement des Sitzgestells (1) anordenbar ist, um eine Armlehne der Fahrzeugsitzbank zu bilden, **dadurch gekennzeichnet, dass** das dritte Polsterelement in der zweiten Nutzposition unmittelbar auf der Anlagefläche (49) aufliegend anbringbar ist.

2. Fahrzeugsitzanordnung (19) nach dem vorangegangenen Anspruch 1, **dadurch gekennzeichnet, dass** der Haltemechanismus (5) als ein Rastmechanismus ausgebildet ist.

3. Fahrzeugsitzanordnung (19) nach einem der vorangegangenen Ansprüche, **dadurch gekennzeichnet, dass** die Rückenlehnenstruktur (3) als ein Rahmen ausgebildet ist, mit mindestens zwei Vertikalstreben (21, 22) und mindestens zwei Horizontalstreben (23, 24), wobei eine Horizontalstrebe (23, 24) zwei Vertikalstreben (21, 22) an Enden (25, 26) der Vertikalstreben (21, 22) miteinander verbindet.

4. Fahrzeugsitzanordnung (19) nach einem der vorangegangenen Ansprüche, **dadurch gekennzeichnet, dass** die Fahrzeugsitzanordnung (19) ein zweites Polsterelement (42) aufweist, wobei das zweite Polsterelement (42) in der ersten Nutzposition ein Sitzpolster des Fahrzeugsitz der Fahrzeugsitzanordnung (19) bildet, wobei das zweite Polsterelement (42) in der zweiten Nutzposition ein Sitzpolster der Fahrzeugsitzbank der Fahrzeugsitzanordnung (19) bildet.

5. Fahrzeugsitzanordnung (19) nach dem vorangegangenen Anspruch 4, **dadurch gekennzeichnet, dass** das erste und das zweite Polsterelement (41, 42) beweglich miteinander verbunden sind.

6. Fahrzeugsitzanordnung (19) nach einem der vorangegangenen Ansprüche , **dadurch gekennzeichnet, dass** die Fahrzeugsitzanordnung (19) einen Unterbau (54) aufweist, wobei der Unterbau (54) zumindest drei Seitenwände (55-58) umfasst, welche in einem Bodenbereich (50) eines Fahrzeugs (51) aufrecht stehend fixierbar sind, wobei die Seitenwände (55-58) miteinander verbunden sind und einen Innenraum umschließen, wobei im Innenraum das Sitzgestell (1) angeordnet ist, wobei in der zweiten Nutzposition die Rückenlehnenstruktur (3) auf einer Seitenwand (56) des Unterbaus (54) aufliegt, um eine Sitzfläche der Fahrzeugsitzbank zu bilden.

7. Fahrzeugsitzanordnung (19) nach dem vorangegangenen Anspruch 6, **dadurch gekennzeichnet, dass** ein Auflageelement (59) vorhanden ist, welches beweglich mit dem Unterbau (54) verbunden ist, wobei das Auflageelement (59) in einem ersten Zustand festlegbar ist, wobei im ersten Zustand das Auflageelement (59) eine Auflagefläche (60) für ein viertes Polsterelement (53) bildet, wobei das vierte Polsterelement (53) als eine Armlehne der Fahrzeugsitzbank ausgebildet ist.

8. Fahrzeug (51) mit einer Fahrzeugsitzanordnung (19) nach einem der vorangegangenen Ansprüche.

## Claims

1. Vehicle seat arrangement (19) having a seat frame (1), in particular vehicle seat bench, wherein the vehicle seat arrangement (19) forms a vehicle seat in a first use position and a vehicle seat bench in a second use position, wherein the seat frame (1) comprises a supporting arrangement (2), a backrest structure (3), a joint (4) and a holding mechanism (5), wherein the supporting arrangement (2) comprises a vertical support (6, 7) and attachment means (12), wherein the vertical support (6, 7) can be fixed upright in a floor region (50) of a vehicle (51) by means of the attachment means (12), wherein the backrest structure (3) is connected rotatably to the supporting arrangement (2) via the joint (4), wherein the holding mechanism (5) is designed to fix the backrest structure (3) in a first use state to the supporting arrangement (2), wherein a vehicle seat can be formed with the seat frame (1) in the first use state, wherein the backrest structure (3) forms part of a backrest of the vehicle seat in the first use state, wherein the backrest structure (3) is rotatable counter to the seat direction of the vehicle seat about an axis of rotation of the joint (4) from the first use state into a second use state, wherein a seat surface of the vehicle seat arrangement (19) can be formed with the backrest structure (3) in the second use state, wherein the vehicle seat arrangement (19) has a first cushion element (41), wherein the first cushion element (41) in the first use position forms a backrest cushion of the vehicle seat of the vehicle seat arrangement (19), wherein the first cushion element (41) in the second use position forms a seat cushion of the vehicle seat bench of the vehicle seat arrangement (19), wherein the backrest structure (3) of the seat frame (1) has a bearing surface (49) for bearing the first cushion element (41), and the first cushion element in the first and in the second use position lies against the bearing surface (49) of the backrest structure (3), wherein the backrest structure (3) has a mounting member (27, 28) for the arrangement of a head restraint (29) of the vehicle seat arrangement (19), wherein the seat frame (1) comprises an adapter element (39), wherein the adapter element (39) is arranged on the backrest structure (3), wherein the adapter element (39) comprises a mounting element (40) for the mounting of the head restraint (29) such that, in the state of the adapter element (39) in which it is arranged on the backrest structure (3), the head restraint (29) can be attached to the adapter element (39), wherein the mounting member (27, 28) and the mounting element (40) are spatially spaced apart in the state of the adapter element (39) in which it is arranged on the backrest structure (3), wherein the vehicle seat arrangement (19) has a third cushion element, wherein the third cushion element in the first use position can be arranged on the mounting member of the seat frame (1) in order to form a head restraint (29) of the vehicle seat, wherein the third cushion element in the second use position can be arranged on the mounting element of the seat frame (1) in order to form an armrest of the vehicle seat bench, **characterized in that** the third cushion element in the second use position can be attached so as to lie directly on the bearing surface (49).

2. Vehicle seat arrangement (19) according to the preceding Claim 1, **characterized in that** the holding mechanism (5) is in the form of a latching mechanism.

3. Vehicle seat arrangement (19) according to either of the preceding claims, **characterized in that** the backrest structure (3) is in the form of a frame, with at least two vertical struts (21, 22) and at least two horizontal struts (23, 24), wherein a horizontal strut (23, 24) connects two vertical struts (21, 22) to each other at ends (25, 26) of the vertical struts (21, 22).

4. Vehicle seat arrangement (19) according to one of the preceding claims, **characterized in that** the vehicle seat arrangement (19) has a second cushion element (42), wherein the second cushion element (42) in the first use position forms a seat cushion of the vehicle seat of the vehicle seat arrangement (19), wherein the second cushion element (42) in the second use position forms a seat cushion of the vehicle seat bench of the vehicle seat arrangement (19).

5. Vehicle seat arrangement (19) according to the preceding Claim 4, **characterized in that** the first and the second cushion elements (41, 42) are connected movably to each other.

6. Vehicle seat arrangement (19) according to one of the preceding claims, **characterized in that** the vehicle seat arrangement (19) has a substructure (54), wherein the substructure (54) comprises at least three side walls (55-58) which can be fixed upright in a floor region (50) of a vehicle (51), wherein the side walls (55-58) are connected to one another and enclose an interior space, wherein the seat frame (1) is arranged in the interior space, wherein, in the second use position, the backrest structure (3) rests on a side wall (56) of the substructure (54) in order to form a seat surface of the vehicle seat bench.

7. Vehicle seat arrangement (19) according to the preceding Claim 6, **characterized in that** there is a support element (59) which is movably connected to the substructure (54), wherein the support element (59) can be secured in a first state, wherein, in the first state, the support element (59) forms a support surface (60) for a fourth cushion element (53), wherein the fourth cushion element (53) is in the form of an armrest of the vehicle seat bench.

8. Vehicle (51) with a vehicle seat arrangement (19) according to one of the preceding claims.

## Revendications

1. Agencement (19) de siège de véhicule comprenant une armature de siège (1), en particulier une banquette de véhicule, l'agencement (19) de siège de véhicule formant un siège de véhicule dans une première position d'utilisation et une banquette de véhicule dans une deuxième position d'utilisation, l'armature de siège (1) comprenant un ensemble de support (2), une structure de dossier (3), une articulation (4) et un mécanisme de retenue (5), l'ensemble de support (2) comprenant un support vertical (6, 7) et des moyens de fixation (12), le support vertical (6, 7) étant apte à être fixé en position verticale dans une zone de plancher (50) d'un véhicule (51) au moyen des moyens de fixation (12), la structure de dossier (3) étant reliée à l'ensemble de support (2) par l'intermédiaire de l'articulation (4) de manière à être apte à tourner, le mécanisme de retenue (5) étant conçu de façon à fixer la structure de dossier (3) dans un premier état d'utilisation par rapport à l'agencement de support (2), un siège de véhicule étant apte à être formé avec l'armature de siège (1) dans le premier état d'utilisation, la structure de dossier (3) formant une partie d'un dossier du siège de véhicule dans le premier état d'utilisation, la structure de dossier (3) étant apte à être tournée autour d'un axe de rotation de l'articulation (4) dans le sens inverse du sens d'assise du siège de véhicule du premier état d'utilisation à un deuxième état d'utilisation, dans le deuxième état d'utilisation, une surface d'assise de l'agencement (19) de siège de véhicule étant apte à être formée avec la structure de dossier (3), l'agencement (19) de siège de véhicule présentant un premier élément formant coussin (41), le premier élément formant coussin (41) formant, dans la première position d'utilisation, un coussin de dossier du siège de véhicule de l'agencement (19) de siège de véhicule, le premier élément formant coussin (41) formant, dans la deuxième position d'utilisation, un coussin de siège de la banquette de véhicule de l'agencement (19) de siège de véhicule, la structure de dossier (3) de l'armature de siège (1) présentant une surface d'appui (49) pour l'appui du premier élément formant coussin (41) et le premier élément formant coussin s'appuyant dans la première et dans la deuxième position d'utilisation sur la surface d'appui (49) de la structure de dossier (3), la structure de dossier (3) présentant un organe de montage (27, 28) pour l'agencement d'un appui-tête (29) de l'agencement de siège de véhicule (19), l'armature de siège (1) comprenant un élément adaptateur (39), l'élément adaptateur (39) étant agencé sur la structure de dossier (3), l'élément adaptateur (39) comprenant un élément de montage (40) pour le montage de l'appui-tête (29), de sorte que l'appui-tête (29) soit apte à être monté sur l'élément adaptateur (39) lorsque l'élément adaptateur (39) est disposé sur la structure de dossier (3), l'organe de montage (27, 28) et l'élément de montage (40) étant distants spatialement lorsque l'élément adaptateur (39) est disposé sur la structure de dossier (3), l'agencement (19) de siège de véhicule présentant un troisième élément formant coussin, le troisième élément formant coussin étant apte à être disposé dans la première position d'utilisation sur l'organe de montage de l'armature de siège (1) pour former un appui-tête (29) du siège de véhicule, le troisième élément formant coussin étant apte à être disposé dans la deuxième position d'utilisation sur l'élément de montage de l'armature de siège (1) de façon à former un accoudoir de la banquette de véhicule, **caractérisé en ce que** le troisième élément formant coussin est apte à être monté dans la deuxième position d'utilisation en reposant directement sur la surface d'appui (49).

2. Agencement (19) de siège de véhicule selon la revendication 1 précédente, **caractérisé en ce que** le mécanisme de retenue (5) est conçu sous la forme d'un mécanisme à crans.

3. Agencement (19) de siège de véhicule selon l'une quelconque des revendications précédentes, **caractérisé en ce que** la structure de dossier (3) est réalisée sous la forme d'un cadre comprenant au moins deux entretoises verticales (21, 22) et au moins deux entretoises horizontales (23, 24), une entretoise horizontale (23, 24) reliant deux entretoises verticales (21, 22) aux extrémités (25, 26) des entretoises verticales (21, 22).

4. Agencement (19) de siège de véhicule selon l'une quelconque des revendications précédentes, l'agencement (19) de siège de véhicule comprenant un deuxième élément formant coussin (42), le deuxième élément formant coussin (42) formant, dans la première position d'utilisation, un coussin de siège du siège de véhicule de l'agencement (19) de siège de véhicule, le deuxième élément formant coussin (42) formant, dans la deuxième position d'utilisation, un coussin de siège de la banquette de véhicule de l'agencement (19) de siège de véhicule.

5. Agencement (19) de siège de véhicule selon la revendication 4 précédente, **caractérisé en ce que** le premier et le deuxième éléments formant coussin (41, 42) sont reliés entre eux de manière mobile.

6. Agencement (19) de siège de véhicule selon l'une quelconque des revendications précédentes, **caractérisé en ce que** l'agencement (19) de siège de véhicule comprend une structure inférieure (54), la structure inférieure (54) comprenant au moins trois parois latérales (55-58) qui sont aptes à être fixées en position verticale dans une zone de plancher (50) d'un véhicule (51), les parois latérales (55-58) étant reliées entre elles et entourant un espace intérieur, l'armature de siège (1) étant disposé dans l'espace intérieur, la structure de dossier (3) reposant, dans la deuxième position d'utilisation, sur une paroi latérale (56) de la structure inférieure (54) afin de former une surface d'assise de la banquette de véhicule.

7. Agencement (19) de siège de véhicule selon la revendication 6 précédente, **caractérisé en ce qu'**il est prévu un élément d'appui (59) qui est relié de manière mobile à la structure inférieure (54), l'élément d'appui (59) étant apte à être fixé dans un premier état, dans lequel premier état l'élément d'appui (59) forme une surface d'appui (60) pour un quatrième élément formant coussin (53), le quatrième élément formant coussin (53) étant conçu sous la forme d'un accoudoir de la banquette de véhicule.

8. Véhicule (51) comprenant un agencement (19) de siège de véhicule selon l'une des revendications précédentes.
